# EUROPÄISCHE PATENTSCHRIFT

(11) **EP 3 695 983 B1**
(45) Veröffentlichungstag und Bekanntmachung des Hinweises auf die Patenterteilung: **06.03.2024**
(21) Anmeldenummer: 19168602.1
(22) Anmeldetag: 11.04.2019
(51) Int. Cl.: B44C 5/04, B44D 3/00

(54) **VERFAHREN UND SYSTEM ZUM BEREITSTELLEN EINER DEKORKOMBINATION**
METHOD AND SYSTEM FOR PROVIDING A COMBINATION OF DECORATIVE ELEMENTS
PROCÉDÉ ET SYSTÈME DE FOURNITURE D'UNE COMBINAISON DÉCORATIVE

(30) Priorität: 12.02.2019 DE 102019103427
(43) Veröffentlichungstag der Anmeldung: 19.08.2020
(73) Patentinhaber: Fritz Egger GmbH & Co. OG, 6380 St. Johann in Tirol (AT)
(72) Erfinder: Fischer, Klaus, 57319 Bad Berleburg (DE)
(74) Vertreter: Cohausz & Florack

(56) Entgegenhaltungen:
- EP-A1- 3 447 098
- EP-A2- 2 247 451
- US-A1- 2016 207 307

## Beschreibung

Die Erfindung betrifft ein Verfahren zum Bereitstellen einer Dekorkombination für Möbelteile und/oder Innenausbauteile. Die Erfindung betrifft zudem ein System zur Durchführung eines erfindungsgemäßen Verfahrens, das System umfassend eine Farbmesseinrichtung, einen Drucker und eine Steuereinrichtung. Plattenförmige Werkstoffe mit Dekoren werden im Möbelbau, im Innenausbau sowie weiteren Anwendungen wie dem Innenausbau von Fahrzeugen eingesetzt. Plattenförmige Werkstoffe sind insbesondere Holzwerkstoffplatten, beispielsweise Spanplatten, Faserplatten oder OSB-Platten (oriented strand board), Kompaktplatten (Hochdruck-Schichtpressstoffplatten gemäß Europäischer Norm EN 438 Teil 1 bis 7) oder Kunststoffplatten, beispielsweise Platten aus thermoplastischen oder duroplastischen Kunststoffen. Plattenförmige Werkstoffe werden insbesondere bei der Verwendung im Möbel oder Innenausbau mit einem ersten Dekor an einer Plattenoberfläche versehen. Das erste Dekor wird beispielsweise über das Aufbringen von bedrucktem Dekorpapier in eine Schichtstruktur an der Plattenoberfläche des plattenförmigen Werkstoffs oder ein direktes Bedrucken der Plattenoberfläche erzeugt.

Solche plattenförmige Werkstoffe werden an ihren Schmalflächen (Seitenkanten) oftmals mit Kunststoffkantenprofilen versehen. Die Kantenprofile werden dabei auf die Schmalseiten der Platte aufgeklebt oder damit verschweißt (sogenanntes Bekanten), z.B. mittels Laser oder Hotair-Technologie. Die Kantenprofile dienen zum einen als optisch ansprechender Abschluss solcher Platten, zum anderen auch als Schutz der Schmalseiten gegenüber Stößen oder gegenüber dem Eindringen von Feuchtigkeit. Kantenprofile dieser Art sind ebenfalls häufig mit einem zweiten Dekor versehen, das im Fall von Laminat- bzw. Schichtstoffkanten beispielsweise durch ein bedrucktes Dekorpapier, das in den Schichtaufbau integriert ist, oder im Fall von extrudierten Profilen beispielsweise durch direktes Bedrucken des Kunststoffprofils bereitgestellt wird.

Werden plattenförmige Werkstoffe im Innenausbau eingesetzt, beispielsweise zur Ausbildung von Fußbodenelementen, Wandvertäfelungen oder Deckenelementen, liegt oftmals ebenso eine Kombination mit weiteren sichtbaren Bauteilen vor, beispielsweise Fußbodenleisten, Rahmenleisten oder Deckenleisten.

Schließlich werden auch plattenförmige Werkstoffe mit Dekoren miteinander kombiniert, beispielsweise im Möbelbau. Bei einem Möbelstück können z.B. die Frontteile und Seitenteile Dekore aufweisen. Ebenso können Anordnungen von Möbelstücken wie Küchenzeilen oder Schrankwände mit Dekorkombinationen ausgestattet werden, wobei beispielsweise benachbarte Frontteile zueinander abgestimmte Dekore aufweisen.

Dekore werden zunehmend über digitale Druckverfahren erzeugt, welchen eine begrenzte Anzahl von Grundfarben zugrunde liegt. Problematisch bei dem Abstimmen von Dekoren in Druckverfahren ist hierbei, dass sich das Erscheinungsbild eines Dekors mit der Lichtart verändern kann. Beispielsweise kann zwischen Dekoren ein Metamerieeffekt auftreten, wobei die Dekore bei einer ersten Lichtart keinen Farbabstand aufweisen, während sich zwischen den Dekoren bei einem Wechsel der Lichtart zu einer zweiten, von der ersten verschiedenen Lichtart ein Farbabstand ausbildet. Die Dekore ergeben somit bei einer Lichtart in etwa das gleiche Erscheinungsbild, unterliegen bei einem Wechsel der Lichtart jedoch einer unterschiedlichen Farbverschiebung. Zur Erfassung dieses Effekts ist in der DIN 6172 ein Metamerie-Index angegeben.

Die EP 2 247 451 A2 beschreibt ein Verfahren zum Herstellen eines dekorierten Profilkörpers, wobei zwischen dem Dekor des Profilkörpers und einem dazu ähnlichen, vorzugsweise identischen, Referenzdekor im Wesentlichen kein Metamerie-Effekt auftreten soll. Hierbei soll der Dekorgrund einen Farbaufbau aus einem gegenüber der Dekorveredlung erweiterten Farbraum aufweisen.

Ein Verfahren zur Herstellung dekorativer Oberflächen ist aus der US 2016/207307 A1 bekannt. Das Verfahren umfasst die folgenden Schritte: Imprägnieren eines Papiersubstrats mit wärmehärtendem Harz, Tintenstrahldruck eines Farbmusters mit einer oder mehreren wässrigen, ein polymeres Latexbindemittel enthaltenden Tintenstrahltinten auf das mit wärmehärtendem Harz imprägnierte Papier, und Heißpressen des das Farbmuster tragenden wärmehärtenden Papiers in eine dekorative Oberfläche. Für eine möglichst getreue Nachbildung von Holzfarben mit minimaler Metamerie soll der Metamerieindex möglichst nicht größer als eins sein.

Die EP 3 447 098 A1 offenbart einen Satz pigmentierter wässriger Tintenstrahltinten sowie ein Tintenstrahldruckverfahren zum Herstellen dekorativer Paneele, das folgende Schritte aufweist: Bereitstellen eines Papiersubstrats, das eine oder mehrere Farbempfangsschichten umfasst; Erzeugen eines Farbbildes mit einer oder mehreren pigmentierten wässrigen Tintenstrahltinten, wobei das Papiersubstrat eine oder mehrere Farbempfangsschichten umfasst; und Trocknen des erzeugten Farbbildes.

Die vorliegende Erfindung hat sich die Aufgabe gestellt, ein Verfahren zum Bereitstellen einer Dekorkombination für Möbelteile und/oder Innenausbauteile anzugeben, wobei das Abstimmen der Dekorkombination im Hinblick auf einen Wechsel der Lichtart weiter vereinfacht wird. Zudem soll zur Lösung dieser Aufgabe ein System mit einer Farbmesseinrichtung, einem Drucker und einer Steuereinrichtung beschrieben werden.

Gemäß einer ersten Lehre wird die genannte Aufgabe in Bezug auf ein Verfahren gemäß Anspruch 1 gelöst, das Verfahren umfassend: Durchführen von Farbmessungen unter mindestens zwei verschiedenen Lichtarten an einem ersten Dekor eines ersten Bauteils; Ermitteln einer Referenzfarbänderung des ersten Dekors unter dem Wechsel zwischen den mindestens zwei verschiedenen Lichtarten; und Drucken eines zweiten Dekors auf ein zweites Bauteil, wobei eine Auswahl und/oder eine Zusammenstellung von Tinten zum Drucken anhand einer Farbänderung der Tinten unter einem Lichtartwechsel derart durchgeführt wird, dass eine Farbänderung des zweiten Dekors unter dem Wechsel zwischen den mindestens zwei verschiedenen Lichtarten der Referenzfarbänderung angeglichen wird, wobei für mindestens eine Grundfarbe der Tinten mindestens zwei verschiedene Tintenarten vorgesehen sind, wobei die mindestens zwei verschiedenen Tintenarten einer Grundfarbe abweichende Farbänderungen unter dem Wechsel zwischen den mindestens zwei verschiedenen Lichtarten aufweisen und wobei die mindestens zwei verschiedenen Tintenarten einer Grundfarbe in separaten Behältern bereitgestellt werden sowie vor dem Drucken und/oder beim Drucken derart kombiniert werden, dass die Farbänderung der Referenzfarbänderung angeglichen wird.

Gemäß einer zweiten Lehre wird die genannte Aufgabe in Bezug auf ein System gemäß Anspruch 14 gelöst.

Das System gemäß der zweiten Lehre ist zur Durchführung eines Verfahrens gemäß der ersten Lehre eingerichtet.

Mit dem Durchführen von Farbmessungen unter mindestens zwei verschiedenen Lichtarten an einem ersten Dekor eines ersten Bauteils werden für die jeweilige Lichtart Farbmesswerte erhalten. Die Farbmesswerte können hierbei in Abhängigkeit der Lichtart gesetzt werden. Beispielsweise wird für mindestens einen Farbmesswert (z.B. mindestens ein Farbkanal) eine Abhängigkeit von der Lichtart ermittelt, wobei insbesondere diskrete Farbmesswerte über eine Messkurve dargestellt werden. Optional kann für die diskreten Farbmesswerte eine Modellierung durchgeführt werden, beispielsweise in Form einer Ausgleichskurve.

Hieraus ergibt sich insbesondere ein Maß für eine Farbverschiebung des ersten Dekors unter einem Wechsel der Lichtart. Die Referenzfarbänderung kann indikativ für eine Farbverschiebung eines oder mehrerer Farbmesswerte sein, beispielsweise mindestens eines Farbkanals.

Ein Drucken eines zweiten Dekors auf ein zweites Bauteil wird unter Verwendung von Tinten durchgeführt. Hierbei kann ein Direktdruck auf das zweite Bauteil zur Erzeugung des zweiten Dekors vorgesehen sein und/oder ein zweites Dekor auf einen Dekorträger wie ein Dekorpapier aufgedruckt werden, wobei der Dekorträger für das zweite Bauteil vorgesehen ist.

Zum Drucken des zweiten Dekors wird eine Auswahl und/oder eine Zusammenstellung von Tinten durchgeführt. Hierbei können beispielsweise eine oder mehrere Tinten aus einer vorgegebenen Gruppe von Tinten ausgewählt werden oder Tinten erzeugt bzw. vorgegebene Tinten miteinander gemischt werden. Die Auswahl und/oder die Zusammenstellung von Tinten wird hierbei anhand einer Farbänderung der Tinten unter einem Lichtartwechsel durchgeführt. Beispielsweise werden die

Auswahl und/oder Zusammenstellung der Tinten anhand der von einer Pigmentart, Pigmentgröße und/oder einem Bindemittel für die Tinten verursachten Farbänderung vorgenommen. Bei dem Lichtartwechsel zur Farbänderung der Tinten handelt es sich um den Wechsel zwischen den mindestens zwei Lichtarten, welche den Farbmessungen an dem ersten Dekor zugrunde gelegt werden.

Für die Auswahl und/oder die Zusammenstellung von Tinten sind hierbei die Eigenschaften der Farbänderung unter dem Lichtartwechsel bereits zumindest teilweise bekannt und/oder können im Rahmen des Verfahrens gemäß der ersten Lehre zumindest teilweise ermittelt werden. Für die Auswahl und/oder Zusammenstellung der Tinten kann im Rahmen des Verfahrens gemäß der ersten Lehre bzw. insbesondere mit der Steuereinheit der zweiten Lehre ein Druckdatensatz erstellt werden, welcher die Auswahl/Zusammenstellung der Tinten vorgibt.

Die Auswahl und/oder Zusammenstellung der Tinten wird derart durchgeführt, dass eine Farbänderung des zweiten Dekors unter dem Wechsel zwischen den mindestens zwei verschiedenen Lichtarten der Referenzfarbänderung angeglichen wird. Entsprechend kann auf einfache Weise eine unerwünschte Farbverschiebung in einer Dekorkombination des ersten und zweiten Dekors vermindert oder vermieden werden. Bei dem Angleichen der Referenzfarbänderung und der Farbänderung des zweiten Dekors kann es sich um eine Minimierung der Differenz der Referenzfarbänderung und der Farbänderung des zweiten Dekors unter dem Wechsel der mindestens zwei Lichtarten handeln. Hierbei kann die Minimierung auf Grundlage einer vorgegebenen Gruppe von Tinten bzw. Pigmentarten, Pigmentgrößen und/oder Bindemitteln vorgenommen werden.

Das Verfahren kann somit für verschiedene erste Dekore bzw. für beliebige erste Dekore durchgeführt werden, wobei aus den zur Verfügung stehenden Tinten die Tinten ausgewählt und/oder zusammengestellt werden, welche die Farbänderung des zweiten Dekors der Referenzfarbänderung möglichst angleichen. Folglich kann eine unerwünschte Farbverschiebung zwischen dem ersten und zweiten Dekor mit begrenztem Aufwand für eine Vielzahl von Dekorarten minimiert werden.

Dem Drucken kann eine begrenzte Anzahl von Grundfarben zugrunde liegen, beispielsweise CMY(K) (Cyan, Magenta, Gelb und optional Schwarz/Key) oder CcMmYK (Cyan, helles Cyan, Magenta, helles Magenta, Gelb und Schwarz/Key).

Gemäß der Erfindung sind für mindestens eine Grundfarbe der Tinten mindestens zwei verschiedene Tintenarten vorgesehen, wobei die mindestens zwei verschiedenen Tintenarten einer Grundfarbe abweichende Farbänderungen unter dem Wechsel zwischen den mindestens zwei verschiedenen Lichtarten aufweisen. Das Drucken wird hierbei unter der Verwendung von Grundfarben bzw. Farbbestandteilen durchgeführt. Beispielsweise wird zur Abstimmung der Referenzfarbänderung und der Farbänderung des zweiten Dekors mindestens ein Farbbestandteil und/oder Schwarzbestandteil zu vorgegebenen Grundfarben hinzugenommen. Dieser Farbbestandteil bzw. Schwarzbestandteil kann hierbei unter einem Lichtartwechsel ein anderes Verhalten zeigen als die vorgegebenen Farbbestandteile bzw. Schwarzbestandteile. Bevorzugt ist der Unterschied in den Farbänderungen zwischen den Tintenarten möglichst groß, um ein breites Spektrum von Referenzfarbänderungen im zweiten Dekor wiedergeben zu können. Es können für eine der Grundfarben, mehrere oder alle Grundfarben mindestens zwei Tintenarten vorgesehen sein, welche zueinander abweichende Farbänderungen unter einem Wechsel der Lichtart aufweisen. Je mehr Tintenarten eingesetzt werden, desto genauer kann die Farbänderung des zweiten Dekors an die Referenzfarbänderung angeglichen werden.

Beispielsweise wird ein CMYK-Drucken mit vorgegebenen Tintenarten für C, M, Y und K vorgenommen, wobei mindestens eine weitere Tintenart ausgewählt aus C", M", Y" und K" bereitgestellt wird, welche eine andere Farbänderung aufweist als die jeweilige entsprechende vorgegebene Tintenart. Zum Drucken des zweiten Dekors wird ermittelt, ob zum Angleichen der Referenzfarbänderung und Farbänderung des zweiten Dekors die vorgegebene Tintenart, die entsprechende weitere Tintenart oder eine Mischung dieser Tintenarten verwendet wird. Beispielsweise wird zwischen den Tintenarten Y und Y" in Abhängigkeit davon gewählt, welcher der beiden Gelbtöne die Referenzfarbänderung in einem Drucken des zweiten Dekors möglichst genau nachbilden kann. Unter einem CMYK-Farbmodell sollen auch beispielsweise erweiterte Drucktechniken basierend auf CMYK-Farbmodellen wie CcMmYK oder CMYKOG (Hexachrome) verstanden werden.

Ebenso kann ein zusätzlicher Farbbestandteil hinzugenommen werden, beispielsweise wird zum CMYK-Farbmodell eine weitere Grundfarbe hinzugenommen, beispielsweise ein Rot- oder Orangeton, Blauton oder Grünton. Ebenfalls kann einer der Farbbestandteile und/oder der Schwarzbestandteil des CMYK-Farbmodell ausgetauscht werden, beispielsweise wird Magenta durch einen Rot- oder Orangeton getauscht bzw. die Druckfarbe gemischt. Insbesondere liegt der mindestens eine hinzugenommene Farbbestandteil im durch die vorgegebenen Farbbestandteile aufgespannten Gamut.

Durch den hinzugenommenen Farbbestandteil kann somit einerseits die Farbauflösung in einem Bereich des (ursprünglichen) Gamuts erhöht werden. Somit kann das zweite Dekor mit höherer Farbauflösung wiedergegeben werden, wodurch die Farbänderung des zweiten Dekors der Referenzfarbänderung weiter angeglichen werden kann. Insbesondere weist der hinzugenommene Farbbestandteil im Vergleich zu den vorgegebenen Farbbestandteilen mindestens eine weitere Pigmentart, weitere Pigmentgröße und/oder mindestens ein anderes Bindemittel auf.

Erfindungsgemäß werden die mindestens zwei verschiedenen Tintenarten einer Grundfarbe in separaten Behältern bereitgestellt. Hierbei kann ein einzelner Druckkopf für die Grundfarbe vorgesehen sein, und die für eine Angleichung der Farbänderung des zweiten Dekors an die Referenzfarbänderung geeignetere Tintenart für die Grundfarbe wird ausgewählt und dem Druckkopf zum Drucken des zweiten Dekors zugeführt.

Ebenso können die mindestens zwei verschiedenen Tintenarten einer Grundfarbe vor dem Drucken und/oder beim Drucken derart kombiniert werden, dass die Farbänderung des zweiten Dekors der Referenzfarbänderung angeglichen wird. Beispielsweise wird anhand der Referenzfarbänderung und der bekannten Farbänderung der mindestens zwei verschiedenen Tintenarten einer Grundfarbe ein Mischungsverhältnis zwischen den mindestens zwei verschiedenen Tintenarten einer Grundfarbe bestimmt, so dass ein Angleichen der Farbänderung des zweiten Dekors an die Referenzfarbänderung erreicht wird. Die Mischung der verschiedenen Tintenarten einer Grundfarbe kann vor dem Druck erzeugt und beispielsweise einem einzelnen Druckkopf zugeführt werden.

Ebenso kann in einer Ausgestaltung der Erfindung für die mindestens zwei verschiedenen Tintenarten einer Grundfarbe jeweils mindestens ein Druckkopf vorgesehen sein. Mengenanteile der jeweiligen Tintenart können anhand der Referenzfarbänderung und der bekannten Farbänderung der mindestens zwei verschiedenen Tintenarten einer Grundfarbe bestimmt und für den Druck verwendet werden. Ebenso kann der jeweiligen Tintenart eine Pixelgröße zum Drucken zugeordnet werden, wobei die Pixelgröße derart bestimmt wird, dass die Farbänderung des zweiten Dekors der Referenzfarbänderung angeglichen wird.

In einer Ausgestaltung der Erfindung ist das erste Dekor und/oder das zweite Dekor als Uni-Dekor ausgestaltet. Mit einem unifarbenen ersten Dekor wird die Durchführung der Farbmessung vereinfacht, da eine geringe Anzahl an (räumlichen) Messpunkten oder ggf. ein einziger Messpunkt an dem ersten Dekor bereits ausreicht, um eine für das erste Dekor repräsentative Farbänderung zu erhalten.

In einer weiteren Ausgestaltung der Erfindung kann das erste Dekor jedoch als mehrfarbiges Dekor ausgestaltet sein. Um die Referenzfarbänderung des mehrfarbigen Dekors zu erhalten, können die Farbmessungen unter mindestens zwei verschiedenen Lichtarten an mehreren Abschnitten des ersten Dekors durchgeführt werden. Beispielsweise wird dem ersten Dekor ein Raster von Messpunkten zugeordnet, wobei an den Messpunkten jeweils eine Farbmessungen bei jeder der mindestens zwei verschiedenen Lichtarten durchgeführt wird.

Die Referenzfarbänderung kann durch eine statistische Auswertung der Farbmessungen an den mehreren Abschnitten des ersten Dekors erhalten werden. Insbesondere wird für die Abschnitte des ersten Dekors jeweils eine Farbänderung ermittelt. Die hiermit ermittelten Farbänderungen können einer statistischen Auswertung unterzogen werden, wobei die Farbänderungen der Abschnitte insbesondere gemittelt werden können, um die Referenzfarbänderung zu erhalten. Bei dieser Ausführungsform wird ein mittlerer Farbwert für mehrfarbige Dekore erhalten.

In einer Ausgestaltung der Erfindung werden Farbmesswerte aus den Farbmessungen aus mehreren Abschnitten des ersten Dekors gruppiert. Hierbei kann die Gruppierung in Abhängigkeit des Farbabstands der Farbmesswerte durchgeführt werden und beispielsweise Abschnitte mit ähnlichen Farbmesswerten miteinander gruppiert werden (z.B. mit in gleichen Intervallen liegenden Farbmesswerten und/oder mit Farbmesswerten, welche zueinander einen vorgegebenen maximalen Farbabstand einhalten). Als Farbabstand kann hierbei beispielsweise mindestens eines von Δ*E*, Δ*L**, Δ*a**, Δ*b** sowie Δ*h*_{ab} (Bunttonwinkel-Differenz) gemäß einem CIELAB-Farbraum herangezogen werden.

Für die gruppierten Farbmesswerte bzw. für die Abschnitte des ersten Dekors, deren Farbmesswerte jeweils einer Gruppe von Farbmesswerten zugeordnet sind, kann jeweils die zuvor beschriebene Auswahl/Zusammenstellung von Tinten erfolgen. Folglich wird für jede Gruppe von Farbmesswerten ein entsprechendes Angleichen der Farbänderung des zweiten Dekors an die Referenzfarbänderung durchgeführt.

In einer Ausgestaltung der Erfindung wird die Farbmessung der Abschnitte des ersten Dekors mit einer Auflösung von mindestens 100 dpi durchgeführt. Entsprechend sind die Farbmessungen auch für feiner strukturierte mehrfarbige Dekore repräsentativ, womit die Farbänderung des zweiten Dekors mit verbesserter Genauigkeit an die Referenzfarbänderung angeglichen werden kann. Farbmessungen der Abschnitte des ersten Dekors mit einer Auflösung von mindestens 200 dpi haben sich für Anwendungen für Möbelteile und/oder Innenausbauteile als vorteilhaft herausgestellt.

In einer weiteren Ausgestaltung der Erfindung wird die Farbmessung der Abschnitte des ersten Dekors über eine Messlänge von mindestens 1 mm, insbesondere mindestens 10 mm und/oder von maximal 220 mm durchgeführt. Hierbei können Messpunkte insbesondere linear bzw. eindimensional vorgesehen sein. Ebenso kann auch eine flächige Anordnung von Messpunkten vorgesehen sein (z.B. in Form eines Rasters), wobei die flächige Anordnung der Messpunkte in mindestens einer Raumrichtung die genannte Messlänge aufweist.

In einer weiteren Ausgestaltung der Erfindung wird eine hyperspektrale Farbmessung vorgenommen. Unter einer hyperspektralen Farbmessung wird insbesondere verstanden, dass Intensitätswerte in mehreren Kanälen für verschiedene Energieintervalle gemessen werden, wobei mindestens zwei der Energieintervalle aneinander anschließen oder überlappen. Bei einer hyperspektralen Farbmessung werden somit insbesondere benachbarte Intensitätswerte wiedergegeben. Eine hyperspektrale Farbmessung kann somit zumindest teilweise ein kontinuierliches Spektrum wiedergeben. Eine hyperspektrale Farbmessung hat unter anderem den Vorteil, dass auch für das Auge nicht sichtbare Farbinformationen erfasst werden können.

In einer Ausgestaltung der Erfindung werden die mindestens zwei verschiedenen Lichtarten ausgewählt aus einer Gruppe umfassend A, C, D50, D55, D65, D75, E, F11, F2 und F7. Die Lichtarten entsprechen hierbei den Normlichtarten nach DIN 5033 und DIN 6172. Insbesondere wird als eine der mindestens zwei verschiedenen Lichtarten D65 ausgewählt, welche als Referenzlichtart dienen kann. Die zweite Lichtart kann abhängig vom Anwendungsfall ausgewählt werden, wobei insbesondere eine für künstliches Licht repräsentative Lichtart wie F11 und/oder A verwendet wird.

Auf Grundlage der Farbmessungen können Werte in Farbkanälen eines Farbraums ermittelt werden. Als Farbraum können verschiedene Farbräume herangezogen werden, beispielsweise CIE-Farbräume wie etwa der CIE-*XYZ-*Farbraum, CIELAB-Farbraum oder CIE-*LUV-*(1976)-Farbraum. Prinzipiell können auch additive Farbräume herangezogen werden, beispielsweise RGB-Farbräume, welche für Anzeigen wie Bildschirme verwendet werden können. Ebenfalls können subtraktive Farbräume und insbesondere CMY(K)-Farbräume herangezogen werden, welche beispielsweise für Druckverfahren angewandt werden. Vorliegend wird beispielhaft vom CIELAB- bzw. *L*a*b**-Farbraum ausgegangen, wie dieser im CIE-Normsystem ausgedrückt wird ("CIELAB"-Koordinaten). Hierzu wird auch auf die DIN EN ISO 11664 und insbesondere Teil 4 der Norm verwiesen. Näherungsweise erscheinen positive *a**-Werte rötlich, negative *a**-Werte grünlich, positive *b**-Werte gelblich und negative *b**-Werte bläulich, während *L** die Helligkeit von 0 (weiß) bis 100 (schwarz) angibt.

Die Farbmessungen können weiter auf Grundlage eines Normalbeobachters vorgenommen werden, beispielsweise des CIE-1964- oder CIE-1931-Normalbeobachters.

In einer Ausgestaltung der Erfindung wird das Ermitteln der Referenzfarbänderung anhand mindestens eines Farbkanals vorgenommen. Der mindestens eine Farbkanal ist insbesondere ausgewählt aus mindestens einem *L** (Luminanz), *C** (Buntheit) und *h_{αb}* (Bunttonwinkel). Entsprechend werden *L*, C** und/oder *h_{αb}* am ersten Dekor für mindestens zwei Lichtarten bestimmt. Die Referenzfarbänderung kann beispielsweise über eine Differenz von *L*, C** und/oder *h_{ab}* zwischen zwei Lichtarten angegeben werden. Diskrete Farbmesswerte der jeweiligen Farbkanäle können ebenso über eine Messkurve dargestellt werden, wobei insbesondere für die diskreten Farbmesswerte eine Modellierung durchgeführt wird, beispielsweise in Form einer Ausgleichskurve.

In einer Ausgestaltung der Erfindung wird ein erstes Bauteil und/oder ein zweites Bauteil umfassend einen plattenförmigen Werkstoff verwendet. Der plattenförmige Werkstoff basiert insbesondere auf Holzwerkstoff, beispielsweise Spanplatte, Faserplatte, OSB-Platte (oriented strand board) und/oder einer Kompaktplatte wie Hochdruck-Schichtpressstoffplatten gemäß EN 438 Teil 1 bis 7. Der plattenförmige Werkstoff kann auf Kunststoff basieren, beispielsweise auf thermoplastischem oder duroplastischem Kunststoff. Eine Sichtseite des plattenförmigen Werkstoffs ist beispielsweise durch eine oder beide Ebenen der Platte gebildet. Das jeweils andere Bauteil kann insbesondere ein Kantenprofil für den plattenförmigen Werkstoff umfassen. Vorzugsweise umfasst das erste Bauteil einen plattenförmigen Werkstoff und weist ein erstes Dekor auf, welches insbesondere als bedrucktes Dekorpapier oder im Direktdruck aufgebracht ist. Das zweite Bauteil umfassend das Kantenprofil wird hierbei mit dem zweiten Dekor bedruckt bzw. ein Dekorträger für das Kantenprofil wird über das Drucken mit dem zweiten Dekor versehen. Das Kantenprofil kann zur Herstellung der Anordnung an einer Schmalseite des plattenförmigen Werkstoffs angebracht werden. Denkbar ist ebenso, dass das erste Bauteil ein Kantenprofil mit einem ersten Dekor umfasst und das zweite Bauteil umfassend einen plattenförmigen Werkstoff mit dem zweiten Dekor bedruckt wird.

In einer weiteren Ausgestaltung des Verfahrens gemäß der ersten Lehre wird mit dem ersten Bauteil und dem zweiten Bauteil weiter ein Möbelteil hergestellt, beispielsweise über eine zuvor beschriebene Anbringung eines Kantenprofils an der Schmalseite eines plattenförmigen Werkstoffs. Ebenso können zwei plattenförmige Werkstoffe miteinander zu einem Möbelteil kombiniert werden, beispielsweise als Front- und Seitenteil. Ebenfalls kann ein Innenausbauteil wie ein Fußbodenelement hergestellt werden, wobei beispielsweise das Fußbodenelement aus einem plattenförmigen Werkstoff hergestellt wird. Das weitere Bauteil kann beispielsweise als Fußbodenleiste ausgestaltet sein, welche an dem Fußbodenelement anliegt oder mit diesem verbunden wird.

Wird gemäß einer weiteren Ausgestaltung das Kantenprofil durch Koextrusion oder Extrusion ausgebildet, kann die Herstellung besonders wirtschaftlich erfolgen. Bei einer Koextrusion kann beispielsweise das in der DE 10 2015 118 055 A1 beschriebene Verfahren angewandt werden, wodurch ein Grundkörper und ein Dekorgrund gemeinsam erzeugt werden können, so dass die Verwendung eines Primers entfallen kann.

Gemäß einer Ausgestaltung wird das erste Bauteil und/oder das zweite Bauteil als Fußbodenelement, insbesondere Fußbodenleiste, Türelement, Wandelement, insbesondere Wandleiste, Deckenelement, insbesondere Deckenleiste und/oder Möbelteil ausgestaltet. Entsprechende Kombinationen von Elementen und zugehörigen Leisten können im Innenausbau als Anordnungen mit Dekorkombinationen eingesetzt werden, wobei insbesondere zwischen Element und Leiste durch die Dekorkombination ein harmonisches Erscheinungsbild bewirkt werden kann.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Lehren offenbart verstanden werden. Die Ausgestaltungen von Verfahrensmerkmalen gemäß der ersten Lehre sollen insbesondere auch mögliche Ausgestaltungen des Systems gemäß der zweiten Lehre betreffen.

Weitere Ausgestaltungen und Vorteile der Erfindung sind in der folgenden detaillierten Beschreibung einiger beispielhafter Ausführungsformen der vorliegenden Erfindung, insbesondere in Verbindung mit der Zeichnung, zu entnehmen. Die Zeichnung zeigt in
- Fig. 1: ein Ausführungsbeispiel eines erfindungsgemäßen Verfahrens,
- Fig. 2: eine schematische Darstellung von Farbmesswerten an einem ersten Dekor unter verschiedenen Lichtarten und
- Fig. 3: eine schematische Darstellung einer Dekorkombination mit einem ersten Bauteil und einem zweiten Bauteil.

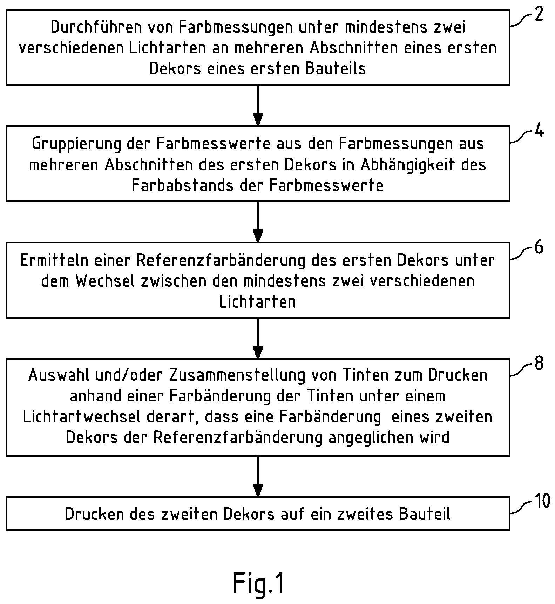

Fig. 1 zeigt ein Ausführungsbeispiel eines erfindungsgemäßen Verfahrens in einem Ablaufdiagramm. Vorangehend wird ein erstes Bauteil mit einem ersten Dekor bereitgestellt, wobei das erste Dekor beispielsweise im Direktdruck oder über ein bedrucktes Dekorpapier auf das erste Bauteil aufgebracht wird. Das erste Bauteil soll mit einem zweiten Bauteil kombiniert werden, wobei die Farbänderung der Dekorkombination abgestimmt wird.

In Aktion 2 werden Farbmessungen unter mindestens zwei verschiedenen Lichtarten an dem ersten Dekor des ersten Bauteils durchgeführt. Hierzu werden beispielsweise an jedem Messpunkt des ersten Dekors jeweils mindestens eine Farbmessung bei den Normlichtarten D65, A und F11 durchgeführt. Hierbei wird eine hyperspektrale Farbmessung eingesetzt.

Das erste Dekor ist ein mehrfarbiges bzw. unstetes Dekor. Um für das erste Dekor repräsentative Farbmesswerte zu erhalten, werden die Farbmessungen unter den mindestens zwei verschiedenen Lichtarten an mehreren (räumlich voneinander beabstandeten) Abschnitten des ersten Dekors durchgeführt. Auf dem ersten Dekor werden Messpunkte über ein Raster mit einer Messlänge von 220 mm verteilt, wobei eine Auflösung von mindestens 100 dpi und insbesondere mindestens 200 dpi verwendet wird. Das Verfahren kann ebenso für Uni-Dekore durchgeführt werden.

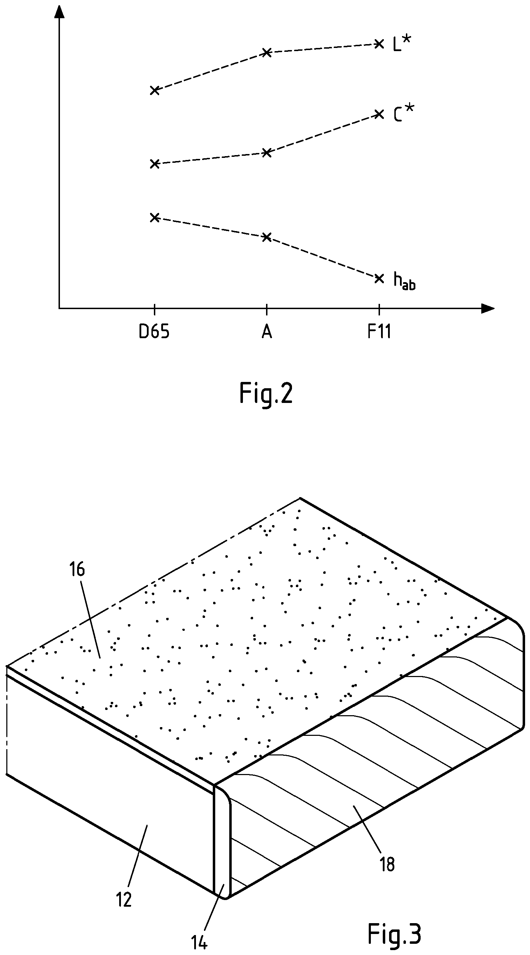

Unter dem Wechsel der Lichtart tritt typischerweise eine Farbverschiebung des ersten Dekors auf. Hierzu sind in Fig. 2 Farbmesswerte an einem einzelnen Messpunkt des ersten Dekors unter verschiedenen Lichtarten schematisch dargestellt. Die Farbmesswerte sind als Farbkanäle im CIELAB-Farbraum ausgedrückt, wobei der Farbmessung ein CIE-1964-Normbeobachter zugrunde liegt. Beispielhaft sind in Fig. 2 die Farbkanäle *L** (Luminanz), *C** (Buntheit) und *h_{αb}* (Bunttonwinkel) und deren Abhängigkeit von der Lichtart dargestellt.

Für jeden vermessenen Abschnitt des ersten Dekors können Farbmesswerte für die Farbkanäle in Abhängigkeit der Lichtart und Messkurven analog zu Fig. 2 erhalten werden. In Aktion 4 aus Fig. 1 werden Farbmesswerte der Farbmessungen aus mehreren Abschnitten des ersten Dekors gruppiert. Hierbei werden ähnliche Farbmesswerte zueinander gruppiert, wobei insbesondere ein Farbabstand wie mindestens eines von Δ*E*, Δ*L**, Δ*a**, Δ*b** und/oder Δ*h*_{ab} der Farbmesswerte als Kriterium für die Gruppierung herangezogen wird.

Auf Grundlage der Farbmesswerte wird in Aktion 6 eine Referenzfarbänderung des ersten Dekors unter dem Wechsel zwischen den mindestens zwei verschiedenen Lichtarten ermittelt. Hierzu werden die gruppierten Farbmesswerte aus Aktion 4 einer statistischen Auswertung unterzogen. In einer Ausführungsform werden die Farbänderungen der Abschnitte gemittelt, um eine gemittelte Farbänderung als Referenzfarbänderung zu erhalten. Alternativ werden für die gruppierten Farbmesswerte bzw. für die Abschnitte des ersten Dekors, deren Farbmesswerte jeweils einer Gruppe von Farbmesswerten zugeordnet sind, jeweils eine Auswahl und/oder Zusammenstellung von Tinten vorgenommen, wie im Folgenden beschrieben wird.

Ein Drucken des zweiten Dekors auf das zweite Bauteil wird im Digitaldruck durchgeführt und kann ebenfalls im Direktdruck und/oder über das Bedrucken eines Dekorpapiers vorgenommen werden. Das Drucken wird mit den vorgegebenen Tintenarten für C, M, Y und K vorgenommen, wobei mindestens eine weitere Tintenart ausgewählt aus C", M", Y" und K" bereitgestellt wird. Die weiteren Tintenarten C", M", Y" und/oder K" weisen eine zur jeweiligen entsprechenden vorgegebenen Tintenart C, M, Y und K verschiedene Farbänderung auf. Für die einzelnen Tintenarten sind beispielsweise Messkurven ähnlich wie in Fig. 2 gezeigt vorbekannt oder werden im Rahmen des Verfahrens ermittelt, wobei auf Grundlage dieser Farbmesswerte für die Tintenarten eine zu erwartende Farbänderung des zu druckenden zweiten Dekors modelliert werden kann.

Zum Drucken des zweiten Dekors wird ermittelt, ob zum Angleichen der Farbänderung des zweiten Dekors zur Referenzfarbänderung die vorgegebene Tintenart, die entsprechende weitere Tintenart oder eine Mischung dieser Tintenarten verwendet wird. Beispielsweise wird in Aktion 8 zwischen den Tintenarten Y und Y" gewählt bzw. die Tintenarten werden in einem Verhältnis abhängig davon zusammengestellt, welcher der beiden Gelbtöne Y und Y" die Referenzfarbänderung in einem Drucken des zweiten Dekors möglichst genau nachbilden kann.

Die mindestens zwei verschiedenen Tintenarten werden in separaten Behältern und beispielsweise vor dem Drucken gemischt und über einen einzelnen Druckkopf in Aktion 10 aufgebracht. Alternativ ist für die mindestens zwei verschiedenen Tintenarten jeweils ein Druckkopf vorgesehen, womit die Tintenarten unabhängig voneinander gedruckt werden können. Hierbei können die Mengenverhältnisse und/oder die aufgedruckte Pixelgröße der jeweiligen Tintenart derart variiert werden, dass die Farbänderung des zweiten Dekors der Referenzfarbänderung angeglichen wird.

In Fig. 3 zeigt weiter eine schematische Darstellung einer Dekorkombination mit einem ersten Bauteil 12 und einem zweiten Bauteil 14 für Möbelteile und/oder Innenausbauteile. Das erste Bauteil 12 umfasst einen plattenförmigen Werkstoff, welcher beispielsweise durch eine Holzwerkstoffplatte wie eine Spanplatte oder Faserplatte ausgebildet ist. Das erste Bauteil 12 weist ein erstes Dekor 16 in Form einer Dekorschicht auf, welche beispielsweise durch Beschichtung mit einem bedruckten Dekorpapier oder durch Direktdruck auf der Sichtfläche des ersten Bauteils 12 ausgebildet ist.

Ein zweites Bauteil 14 umfassend ein Kantenprofil für den plattenförmigen Werkstoff des ersten Bauteils 12 ist an der Schmalseite des ersten Bauteils 12 angeordnet. Das zweite Bauteil 14 weist ein über das beschriebene Verfahren aufgedrucktes zweites Dekor 18 an einer Sichtfläche auf, welches zusammen mit dem ersten Dekor 16 eine Dekorkombination bildet. Mit dem erfindungsgemäßen Verfahren ist es möglich, die Farbänderungen des ersten Dekors 16 und zweiten Dekors 18 auf einfache Weise anzugleichen bzw. aufeinander abzustimmen

## Patentansprüche

1. Verfahren zum Bereitstellen einer Dekorkombination für Möbelteile und/oder Innenausbauteile, das Verfahren umfassend:
- Durchführen von Farbmessungen unter mindestens zwei verschiedenen Lichtarten an einem ersten Dekor (16) eines ersten Bauteils (12);
- Ermitteln einer Referenzfarbänderung des ersten Dekors unter dem Wechsel zwischen den mindestens zwei verschiedenen Lichtarten;
- Drucken eines zweiten Dekors (18) auf ein zweites Bauteil (14),
- wobei eine Auswahl und/oder eine Zusammenstellung von Tinten zum Drucken anhand einer Farbänderung der Tinten unter einem Lichtartwechsel derart durchgeführt wird, dass eine Farbänderung des zweiten Dekors unter dem Wechsel zwischen den mindestens zwei verschiedenen Lichtarten der Referenzfarbänderung angeglichen wird,
- wobei für mindestens eine Grundfarbe der Tinten mindestens zwei verschiedene Tintenarten vorgesehen sind, wobei die mindestens zwei verschiedenen Tintenarten einer Grundfarbe abweichende Farbänderungen unter dem Wechsel zwischen den mindestens zwei verschiedenen Lichtarten aufweisen, und
- **dadurch gekennzeichnet, dass** die mindestens zwei verschiedenen Tintenarten einer Grundfarbe in separaten Behältern bereitgestellt werden sowie vor dem Drucken und/oder beim Drucken derart kombiniert werden, dass die Farbänderung der Referenzfarbänderung angeglichen wird.

2. Verfahren nach Anspruch 1,
wobei für die mindestens zwei verschiedenen Tintenarten einer Grundfarbe jeweils ein Druckkopf vorgesehen wird.

3. Verfahren nach Anspruch 1 oder 2,
wobei das erste Dekor und/oder das zweite Dekor als Uni-Dekor ausgestaltet ist.

4. Verfahren nach einem der Ansprüche 1 bis 3,
- wobei das erste Dekor als mehrfarbiges Dekor ausgestaltet ist,
- wobei die Farbmessungen unter mindestens zwei verschiedenen Lichtarten an mehreren Abschnitten des ersten Dekors durchgeführt werden,
- wobei insbesondere für die Abschnitte des ersten Dekors jeweils eine Farbänderung ermittelt wird.

5. Verfahren nach Anspruch 4,
wobei Farbmesswerte aus den Farbmessungen aus mehreren Abschnitten des ersten Dekors gruppiert werden, insbesondere in Abhängigkeit des Farbabstands der Farbmesswerte.

6. Verfahren nach Anspruch 4 oder 5,
wobei für die Abschnitte des ersten Dekors jeweils eine Farbänderung ermittelt wird und die Farbänderung der Abschnitte gemittelt werden, um die Referenzfarbänderung zu erhalten.

7. Verfahren nach einem der Ansprüche 4 bis 6,
wobei die Farbmessung der Abschnitte des ersten Dekors mit einer Auflösung von mindestens 100 dpi, insbesondere mindestens 200 dpi durchgeführt wird.

8. Verfahren nach einem der Ansprüche 4 bis 7,
wobei die Farbmessung der Abschnitte des ersten Dekors über eine Messlänge von mindestens 1 mm, insbesondere mindestens 10 mm und/oder von maximal 220 mm durchgeführt wird.

9. Verfahren nach einem der vorhergehenden Ansprüche,
wobei eine hyperspektrale Farbmessung vorgenommen wird.

10. Verfahren nach einem der vorhergehenden Ansprüche,
wobei die mindestens zwei verschiedenen Lichtarten ausgewählt werden aus einer Gruppe umfassend A, C, D50, D55, D65, D75, E, F11, F2 und F7, wobei insbesondere als eine der mindestens zwei verschiedenen Lichtarten D65 ausgewählt wird.

11. Verfahren nach einem der vorhergehenden Ansprüche,
wobei das Ermitteln der Referenzfarbänderung anhand mindestens eines Farbkanals ausgewählt aus L*, C* und h_{ab} vorgenommen wird.

12. Verfahren nach einem der vorhergehenden Ansprüche,
**dadurch gekennzeichnet, dass**
ein erstes Bauteil und/oder ein zweites Bauteil umfassend einen plattenförmigen Werkstoff verwendet wird, wobei das jeweils andere Bauteil insbesondere ein Kantenprofil für den plattenförmigen Werkstoff umfasst.

13. Verfahren nach einem der vorhergehenden Ansprüche,
wobei das erste Bauteil und/oder das zweite Bauteil als Fußbodenelement, Türelement, Wandelement, Deckenelement und/oder Möbelteil ausgestaltet wird.

14. System zur Durchführung eines Verfahrens nach einem der vorhergehenden Ansprüche, das System umfassend:
- eine Farbmesseinrichtung zum Durchführen von Farbmessungen unter mindestens zwei verschiedenen Lichtarten an einem ersten Dekor (16) eines ersten Bauteils (12);
- einen Drucker zum Drucken eines zweiten Dekors (18) auf ein zweiten Bauteil (14); und
- eine Steuereinrichtung, welche dafür eingerichtet ist, ein Ermitteln einer Referenzfarbänderung des ersten Dekors unter dem Wechsel zwischen den mindestens zwei verschiedenen Lichtarten durchzuführen,
- wobei die Steuereinrichtung weiter dafür eingerichtet ist, eine Auswahl und/oder eine Zusammenstellung von Tinten zum Drucken anhand einer Farbänderung der Tinten unter einem Lichtartwechsel derart zu bestimmen, dass eine Farbänderung des zweiten Dekors unter dem Wechsel zwischen den mindestens zwei verschiedenen Lichtarten der Referenzfarbänderung angeglichen wird,
- wobei das System für mindestens eine Grundfarbe der Tinten mindestens zwei verschiedene Tintenarten aufweist, wobei die mindestens zwei verschiedenen Tintenarten einer Grundfarbe abweichende Farbänderungen unter dem Wechsel zwischen den mindestens zwei verschiedenen Lichtarten aufweisen, **dadurch gekennzeichnet, dass**
- das System Behälter umfasst, so dass die mindestens zwei verschiedenen Tintenarten einer Grundfarbe in separaten Behältern bereitgestellt sind und
- die Steuereinrichtung eingerichtet ist, vor dem Drucken und/oder beim Drucken die mindestens zwei verschiedenen Tintenarten einer Grundfarbe derart zu kombinieren, dass die Farbänderung der Referenzfarbänderung angeglichen wird.

## Claims

1. Method of providing a decor combination for furniture parts and/or interior fittings, the method comprising:
- taking colour measurements under at least two different illuminants on a first decoration (16) of a first component (12);
- determining a reference colour change of the first decor under the change between the at least two different illuminants;
- print a second decoration (18) on a second component (14),
- wherein a selection and/or a composition of inks for printing is performed based on a colour change of the inks under a change of illuminant such that a colour change of the second decoration under the change between the at least two different illuminants is matched to the reference colour change,
- wherein at least two different types of inks are provided for at least one base colour of the inks, the at least two different types of inks of a base colour having different colour changes under the change between the at least two different illuminants,
**characterized in**
- **that** the at least two different types of ink of a base colour are provided in separate containers and are combined before printing and/or during printing in such a way that the colour change is matched to the reference colour change.

2. Process according to claim 1,
wherein one print head is provided for each of the at least two different types of ink of a basic colour.

3. Process according to claim 1 or 2,
wherein the first decor and/or the second decor is designed as a plain decor.

4. Process according to any one of claims 1 to 3,
- wherein the first decoration is designed as a multi-coloured decoration,
- wherein the colour measurements are made under at least two different illuminants on several sections of the first decor,
- whereinin particular for the sections of the first decor, a colour change is determined in each case.

5. Process according to claim 4,
wherein colour measurement values from the colour measurements from several sections of the first decor are grouped, in particular depending on the colour distance of the colour measurement values.

6. Process according to claim 4 or 5,
wherein a colour change is determined for each of the sections of the first decoration and the colour change of the sections is averaged to obtain the reference colour change.

7. Process according to any one of claims 4 to 6,
wherein the colour measurement of the sections of the first decoration is carried out with a resolution of at least 100 dpi, in particular at least 200 dpi.

8. Process according to any one of claims 4 to 7,
wherein the colour measurement of the sections of the first decoration is carried out over a measuring length of at least 1 mm, in particular at least 10 mm and/or of at most 220 mm.

9. Process according to any one of the preceding claims,
wherein a hyperspectral colour measurement is made.

10. Process according to any one of the preceding claims,
wherein the at least two different illuminants are selected from a group comprising A, C, D50, D55, D65, D75, E, F11, F2 and F7, wherein in particular as one of the at least two different illuminants D65 is selected.

11. Process according to any one of the preceding claims,
wherein the determination of the reference colour change is performed using at least one colour channel selected from L*, C* and h_{ab}.

12. Process according to any one of the preceding claims,
**characterised in that**
a first component and/or a second component comprising a plate-shaped material is used, wherein the respective other component comprises in particular an edge profile for the plate-shaped material.

13. Process according to any one of the preceding claims,
wherein the first component and/or the second component is designed as a floor element, door element, wall element, ceiling element and/or furniture part.

14. System in particular for carrying out a method according to any one of the preceding claims, the system comprising:
- a colour measuring device for performing colour measurements under at least two different illuminants on a first decoration (16) of a first component (12);
- a printer for printing a second decoration (18) on a second component (14); and
- a control device adapted to perform a determination of a reference colour change of the first decoration under the change between the at least two different illuminants,
- wherein the control means is further adapted to determine a selection and/or a composition of inks for printing based on a colour change of the inks under a illuminant change such that a colour change of the second decor under the change between the at least two different illuminants is matched to the reference colour change,
- wherein the system includes at least two different types of inks for at least one base colour of the inks, the at least two different types of inks of a base colour having different colour changes under the change between the at least two different illuminants,
**characterized in**
- **that** the system includes containers, so that the at least two different types of ink of a base colour are provided in separate containers and the control means is adapted to combine the at least two different types of ink of a base colour before printing and/or during printing in such a way that the colour change is matched to the reference colour change.

## Revendications

1. Procédé pour fournir une combinaison de décors pour des éléments de meubles et/ou des éléments d'aménagement intérieur, le procédé comprenant :
- réaliser des mesures de couleur sous au moins deux types de lumière différents au niveau d'un premier décor (16) d'un premier élément (12) ;
- déterminer un changement de couleur de référence du premier décor sous l'alternance entre les au moins deux types de lumière différents ;
- imprimer un deuxième décor (18) sur un deuxième élément (14),
- une sélection et/ou une composition d'encres pour imprimer étant effectuée à l'aide d'un changement de couleur des encres sous un changement de type de lumière de telle sorte qu'un changement de couleur du deuxième décor sous le changement entre les au moins deux types de lumière différents soit ajusté au changement de couleur de référence,
- au moins deux types d'encre différents étant prévus pour au moins une couleur de base des encres, les au moins deux types d'encre différents d'une couleur de base présentant des changements de couleur différents sous le changement entre les au moins deux types de lumière différents,
**caractérisé en ce que**
- les au moins deux types d'encre différents d'une couleur de base sont mis à disposition dans des récipients séparés et sont combinés avant l'impression et/ou lors de l'impression de telle sorte que le changement de couleur soit ajusté au changement de couleur de référence.

2. Procédé selon la revendication 1,
dans lequel une tête d'impression est prévue pour chacun des au moins deux types d'encre différents d'une couleur de base.

3. Procédé selon la revendication 1 ou 2,
- dans lequel premier décor et/ou le deuxième décor sont conçus / est conçu comme un décor uni.

4. Procédé selon l'une des revendications 1 à 3,
- dans lequel le premier décor est conçu comme un décor multicolore,
- dans lequel les mesures de couleur sont effectuées sous au moins deux types de lumière différents au niveau de plusieurs portions du premier décor,
- dans lequel un changement de couleur est en particulier déterminé pour chacune des portions du premier décor.

5. Procédé selon la revendication 4,
- dans lequel des valeurs colorimétriques issues des mesures de couleur effectuées sur plusieurs portions du premier décor sont groupées, en particulier en fonction de l'écart de couleur des valeurs colorimétriques.

6. Procédé selon la revendication 4 ou 5,
- dans lequel un changement de couleur est déterminé pour chacune des portions du premier décor et le changement de couleur des portions est moyenné pour obtenir le changement de couleur de référence.

7. Procédé selon l'une des revendications 4 à 6,
- dans lequel la mesure de couleur des portions du premier décor est effectuée avec une résolution d'au moins 100 dpi, en particulier d'au moins 200 dpi.

8. Procédé selon l'une des revendications 4 à 7,
- dans lequel la mesure de couleur des portions du premier décor est effectuée sur une longueur de mesure d'au moins 1 mm, en particulier d'au moins 10 mm et/ou de 220 mm au maximum.

9. Procédé selon l'une des revendications précédentes,
- dans lequel une mesure de couleur hyperspectrale est effectuée.

10. Procédé selon l'une des revendications précédentes,
- dans lequel les au moins deux types de lumière différents sont choisis dans un groupe comprenant A, C, D50, D55, D65, D75, E, F11, F2 et F7, dans lequel en particulier D65 est choisi comme l'un des au moins deux types de lumière différents.

11. Procédé selon l'une des revendications précédentes,
- dans lequel la détermination du changement de couleur de référence est effectuée à l'aide d'au moins un canal de couleur choisi parmi L*, C* et h_{ab}.

12. Procédé selon l'une des revendications précédentes,
**caractérisé**
**en ce qu'**un premier élément et/ou un deuxième élément comprenant un matériau en forme de plaque est utilisé, où l'autre élément respectif comprend en particulier un profil de bord pour le matériau en forme de plaque.

13. Procédé selon l'une des revendications précédentes,
dans lequel le premier élément et/ou le deuxième élément est conçu comme un élément de plancher, un élément de porte, un élément de mural, un élément de plafond et/ou un élément de meuble.

14. Système pour la mise en oeuvre d'un procédé selon l'une des revendications précédentes, le système comprenant :
- un dispositif de mesure de couleur pour effectuer des mesures de couleur sous au moins deux types de lumière différents sur un premier décor (16) d'un premier élément (12);
- une imprimante pour imprimer un deuxième décor (18) sur un deuxième élément (14) ; et
- un dispositif de commande agencé pour effectuer une détermination d'un changement de couleur de référence du premier décor sous le changement entre les au moins deux types de lumière différents,
- le dispositif de commande étant en outre agencé pour déterminer une sélection et/ou une composition d'encres pour impression sur la base d'un changement de couleur des encres sous un changement de type de lumière de telle sorte qu'un changement de couleur du deuxième décor sous le changement entre les au moins deux types de lumière différents soit ajusté au changement de couleur de référence,
- où le système comprend au moins deux types de d'encres différents pour au moins une couleur de base des encres,
- où les au moins deux types d'encre différents d'une couleur de base présentent des changements de couleur différents lors du changement entre les au moins deux types de lumière différents,
**caractérisé en ce que**
- le système comprend des récipients, de sorte que les au moins deux types d'encre différents d'une couleur de base sont mis à disposition dans des récipients séparés et
- le dispositif de commande est configuré pour combiner, avant l'impression et/ou lors de l'impression, les au moins deux types d'encre différents d'une couleur de base de telle sorte que le changement de couleur soit ajusté au changement de couleur de référence.
